# EUROPEAN PATENT APPLICATION

(11) **EP 4 847 376 A1**
(43) Date of publication of application: **02.12.2026**
(21) Application number: 26161309.5
(22) Date of filing: 27.02.2026
(51) Int. Cl.: B64C 9/22, B64C 13/30, B64C 9/32

(54) **DRIVING SYSTEM AND ASSOCIATED ACTUATION ARCHITECTURE**

(30) Priority: 28.05.2025 LU 601834
(71) Applicant: Airbus Operations GmbH, 21129 Hamburg (DE)
(72) Inventor: Schlipf, Bernhard, 21129 Hamburg (DE); Krey, Dennis, 21129 Hamburg (DE)
(74) Representative: Airbus Germany

(57) **Abstract**

This driving system (24) comprises:
- at least one linear actuator (28), configured for being connected to a fixed wing portion (22),
- an actuation rod (30), connected to the actuator (28) and configured for being moveable by the actuator (28) along an actuation direction (A) relative to the fixed wing portion (22), and
- at least one rocking assembly (32), connected to the actuation rod (30) and configured for being connected to a moveable surface (20), the rocking assembly (32) being configured for being rotatable by the actuation rod (30) relative to the fixed wing portion (22) around a rocker rotation axis (R),

the rocking assembly (32) being configured for moving the moveable surface (20) along a deployment direction (D) relative to the fixed wing portion (22),
wherein the actuation direction (A), the rocker rotation axis (R) and the deployment direction (D) are substantially perpendicular between them.

## Description

The present disclosure relates to a driving system for moving a moveable surface of an aircraft relative to a fixed wing portion of the aircraft. The present disclosure further relates to an actuation architecture comprising a driving system as above mentioned.

**In** the domain of actuation architectures of aircrafts, and for example for high lift systems, one knows using driving systems for moving moveable surfaces relative to fixed wing portions of the aircraft. To that end, one know for example using linear actuator for moving the moveable surfaces. Linear actuators are providing a linear actuation/movement and are for example known for the actuation of moveable surfaces such as spoilers.

**In** known actuation architectures, the moveable surface is in some example moveable around a hinge line relative to the fixed wing portion. The linear actuator in such an actuation architecture is then for example connected to the moveable surface at an actuation point which is offset to the hinge line. Linear actuation of the linear actuator thus results in a rotation of the moveable surface around its hinge line.

The driving system of such an actuation architecture is however not entirely satisfying. First of all, the linear actuator has to be arranged perpendicular to the hinge line of the moveable surface, or in other words, along a chord direction of the moveable surface. The spatial footprint of such a configuration is therefore significant, which leads to integration difficulties for next generation wings, such as for example laminar flow wings. Furthermore, with such driving systems, it is highly complex to actuate moveable surfaces at multiple actuation points. A general solution to provide such an actuation is thus to use an actuator at each actuation point, which increases the cost, weight and complexity of the driving system.

An object of the present invention is thus to obtain a driving system for moving a moveable surface of an aircraft relative to a fixed wing portion of the aircraft, which has a limited spatial footprint, and allows obtaining a lightweight, simple and cost effective actuation architecture.

To this end, the invention relates to a driving system for moving a moveable surface of an aircraft relative to a fixed wing portion of the aircraft, the driving system comprising:
- at least one linear actuator, configured for being connected to the fixed wing portion,
- an actuation rod, connected to the linear actuator and configured for being moveable by the linear actuator along an actuation direction relative to the fixed wing portion, and
- at least one rocking assembly, connected to the actuation rod and configured for being connected to the moveable surface, the rocking assembly being configured for being rotatable by the actuation rod relative to the fixed wing portion around a rocker rotation axis,

the rocking assembly being configured for moving the moveable surface along a deployment direction relative to the fixed wing portion,
wherein the actuation direction, the rocker rotation axis and the deployment direction are substantially perpendicular between them.

The use of a driving system having an actuator, an actuation rod and at least one rocking element as above mentioned is especially advantageous, in particular since it allows for the linear actuator to be arranged perpendicular to the deployment direction, thus limiting the footprint of the device. Such a driving system further allows exploiting the movement of the actuation rod all along the actuation rod, resulting in a lightweight, simple and cost effective driving system.

According to other advantageous aspects of the invention, the driving system comprises one or more of the following features taken alone or according to all technically possible combinations:
- the rocking assembly comprises a rocker and comprises a proximal link and/or a distal link;
- the proximal link is moveable in rotation relative to the actuation rod and movable in rotation relative to the rocker, and/or wherein the distal link is moveable in rotation relative to the rocker and is configured for being moveable in rotation relative to the moveable surface;
- the rocker comprises a proximal portion and a distal portion, the distal portion and the proximal portion defining a L-shape;
- the driving system is such that:
   - the actuation rod comprise a rod pin element, the rocking assembly being moveable in rotation relative to the rod pin element; or
   - the rocking assembly comprising a rocking pin element, the rocking pin element being moveable in rotation relative to the actuation rod;
- the at least one linear actuator is configured for being moveable in rotation relative to the fixed wing portion;
- the driving system comprises a plurality of rocking assemblies, each rocking assembly being connected to the actuation rod and configured for being connected to the moveable surface, each rocking assembly being configured for being rotatable by the actuation rod relative to the fixed wing portion around a respective rocker rotation axis;
- at least two of the rocking assemblies have a different geometries;
- the driving system further comprises at least one braking element;
- the driving system further comprises a position sensing unit, the position sensing unit being configured for sensing a position of the actuation rod relative to the fixed wing portion, the braking element being configured for braking the actuation rod as a function of the sensed position and/or for braking the, or at least one of the, linear actuator(s) as a function of an actuation of the, or at least one of the, linear actuator(s);
- the driving system comprises a plurality of linear actuators;
- the driving system comprises a swivel element, the swivel element being connected to the actuation rod and moveable in rotation relative to the actuation rod, the swivel element connecting two of the linear actuators to the actuation rod; and
- at least one of the linear actuators is connected to a first end of the actuation rod and wherein at least another one of the linear actuators is connected to a second end of the actuation rod.

The invention relates to an actuation architecture comprising a moveable surface, a fixed wing portion and a driving system as above mentioned, wherein the at least one actuator is connected to the fixed wing portion, the actuation rod being moveable by the actuator along the actuation direction relative to the fixed wing portion, the at least one rocking assembly being connected to the moveable surface and being rotatable by the actuation rod relative to the fixed wing portion around the rocker rotation axis.

According to an advantageous aspects of the invention, the actuation architecture further comprises a guiding arrangement, configured for guiding the displacement of the moveable surface relative to the fixed wing portion along the deployment direction.

The invention will be better understood when reading the following description, which is given solely by way of example and with reference to the appended drawings, in which:
- Figure 1 is a schematic view of an aircraft with an actuation architecture comprising a drive system according to the invention;
- Figure 2 is a schematic representation of the actuation architecture comprising the drive system presented in figure 1, in which the moveable surface of the actuation architecture is in a deployed position relative to the fixed wing portion;
- Figure 3 is a schematic representation similar to figure 2, in which the moveable surface is in its retracted position relative to the fixed wing portion;
- Figure 4 is a schematic view of a rocking assembly and a transmission rod of the drive assembly illustrated in figures 2 and 3;
- Figure 5 is a view similar to the view of figure 2, of another example of an actuation architecture comprising a drive system according to the invention;
- Figure 6 is a view similar to the view of figures 2 and 5, of another example of an actuation architecture comprising a drive system according to the invention;
- Figure 7 is a schematic view of a rocking assembly and a transmission rod of the drive assemblies illustrated in figures 5 and 6;
- Figure 8 is a schematic view similar to the view of figure 7, in which the drive assembly comprises another example of rocking assembly and transmission rod.

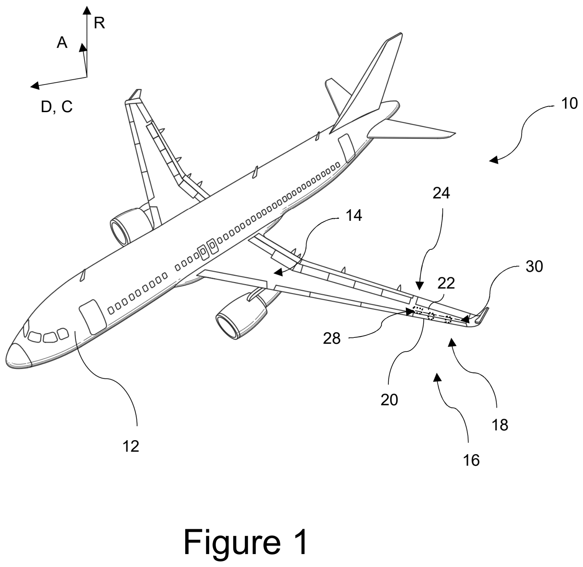

Referring to figure 1, an aircraft 10 comprises a fuselage 12 and wings 14.

The aircraft 10 is for example an airplane and is for example an airliner.

The aircraft 10 comprises an aircraft moveables system 16, for example arranged on the wings 14.

As this will be understood later, the aircraft moveables system 16 is for example a high lift system, a spoiler system or a control surface system of the aircraft 16.

The aircraft 10, and in particular the moveables system 16 of the aircraft comprises an actuation architecture 18.

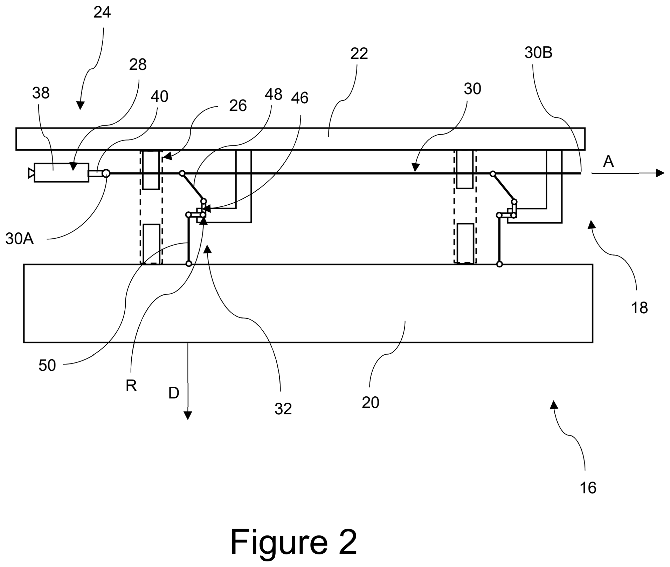

Examples of actuation architectures 18 are illustrated in figures 2, 3, 5 and 6.

The actuation architecture 18 comprises a moveable surface 20, a fixed wing portion 22 and a driving system 24. The actuation architecture 18 further comprises for example a guiding arrangement 26.

The fixed wing portion 22 is for example a portion of the wing 14 which is fixed relative to the fuselage 12. In another example, the fixed wing portion 22 corresponds to a main body of a foldable wing tip.

The fixed wing portion 22 defines a chord direction C (non-illustrated), corresponding for example to a chord of a profile defining the fixed wing portion.

For example, and as illustrated from figure 1, the moveable surface 20 is a slat. In other words, in such an example, the moveables system 16 forms a leading-edge high lift system.

In other non-illustrated examples, the moveable surface 20 is a flap. In such non illustrated examples, the moveables system 16 forms a trailing-edge high lift system.

In yet other non-illustrated examples, the moveable surface 20 is a spoiler or a control surface. In such non-illustrated examples, the moveables system 16 forms a spoiler or a control surface system.

The moveable surface 20 is moveable relative to the fixed wing portion 22. For example, the moveable surface 20 is moveable between a retracted position and a deployed position, the moveable surface 20 being for example further away from the fixed wing portion 22 when it is in its deployed position than when it is in its retracted position.

The moveable surface 20 is in particular moveable along a deployment direction D relative to the fixed wing portion 22.

In an example, the deployment direction D is substantially parallel to the chord direction C. In another example, the deployment direction is angled relative to the chord direction, for example such that the deployment direction points downwards relative to the fixed wing portion 22 (in a configuration where the aircraft is in normal operation configuration or on the ground).

In a non-disclosed example, the moveable surface 20 is moveable relative to the fixed wing portion 22 along a curved direction (for example pointing downwards), the deployment direction D being then for example assimilated to at least one tangential direction to this curved direction. In such an example, the rocking assembly 32 comprises for example an articulation mechanism, for ensuring displacement of the moveable surface by the rocking assembly 32 all along the curved direction.

The guiding arrangement 26 is for example configured for guiding the moveable surface 20 relative to the fixed wing portion 22 along the deployment direction D.

The guiding arrangement 26 is for example guiding a movement of the moveable surface 20 relative to the fixed wing portion 22 resulting from the driving system 24, or in other words, from an actuation of the driving system 24.

The guiding arrangement 26 comprises for example a track and a guiding station (non-referenced). The track is for example fastened to the moveable surface 20 and the guiding station is for example fastened to the fixed wing portion 22. The guiding station is for example configured for guiding the displacement of the track relative to the fixed wing portion 22 so as to guide the displacement of the moveable surface 20 relative to the fixed wing portion 22 along the deployment direction D.

In another (non-illustrated) example, the guiding arrangement 26 comprises for example at least one kinematic arm for guiding the moveable surface 20 relative to the fixed wing portion 22 along the deployment direction D.

For example, one understands that the deployment D direction corresponds to component of the movement of the moveable surface 20 being perpendicular to a spanwise direction (non-referenced) defined by the wing 14. **In** some examples, for example when the moveable surface is moveable along a longitudinal direction of the aircraft, the movement of the moveable surface may comprise a movement component along the spanwise direction of the wing 10.

The driving system 24 is configured for moving the moveable surface 20 relative to the fixed wing portion 22.

As illustrated from figures 2, 3, 5 and 6, the driving system 24 comprises at least one linear actuator 28, an actuation rod 30 and at least one rocking assembly 32.

The driving system 24 further comprises for example a braking element 34 and/or a positioning sensing unit 36.

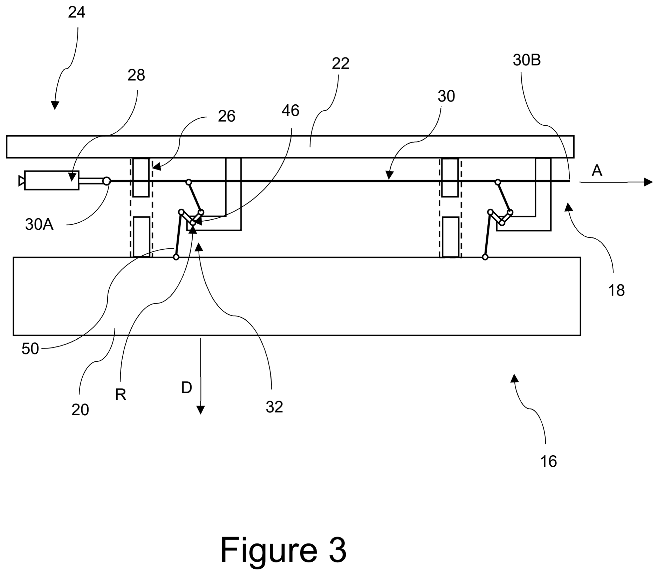

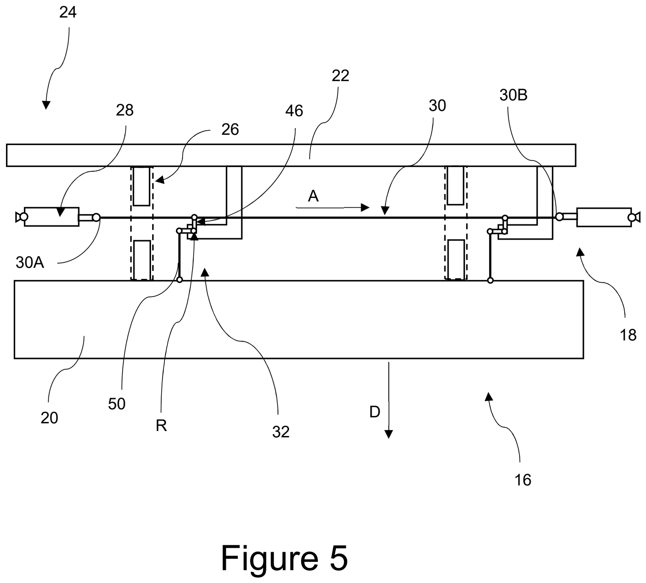

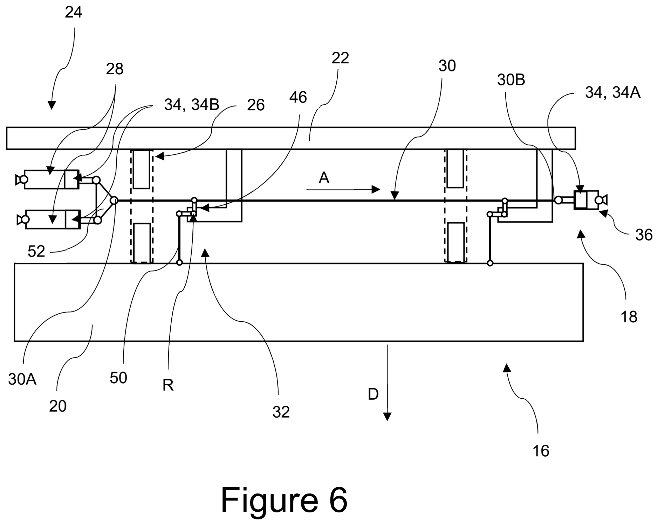

In the example of figures 2 and 3, the driving system 24 comprises one linear actuator. In other examples, and as this will be presented in more details later when presenting the examples of figures 5 and 6, the driving system 24 comprises a plurality of linear actuators 28.

The linear actuator 28 comprises for example a body element 38 and an actuation element 40, moveable in translation relative to the body element 38.

The linear actuator 28 is connected to the fixed wing portion 22. **In** the example of figure 3, the linear actuator is fastened to the fixed wing portion 22.

In other example (such as those of figure 5 and 6), and as this will be presented in more details later, the linear actuator 28 is configured for being moveable in rotation relative to the fixed wing portion 22. In such an example, the linear actuator 28 comprises for example a pivot junction (non-referenced) and is connected to the fixed wing portion 22 by the pivot junction.

As this will be understood later, and in such an example, the linear actuator 28 is for example moveable in rotation relative to the fixed wing portion 22 around an axis parallel to a rocker rotation R axis that will be presented later.

The actuation rod 30 is connected to the linear actuator 28. The actuation rod 30 is configured for being moveable by the linear actuator 28 along an actuation direction A relative to the fixed wing portion 22.

For example, the actuation rod 30 is connected to the actuation element 40 for being moveable along the actuation direction A.

For example, such as in the example of figures 2 and 3, the actuation rod 30 is guided in translation along the actuation direction by the fixed wing portion 22. In other examples, the actuation rod 30 is not guided by the fixed wing portion 22.

The actuation direction A is for example substantially aligned to the displacement direction of the actuation element 40 relative to the body element 38 of the linear actuator 28.

The actuation direction A is for example substantially aligned to the spanwise direction defined by the wing.

In the example of figure 2 and 3, the actuation rod 30 is fastened to the linear actuator 28, and for example to the actuation element 40. In other examples, and as this will be presented in more details later, the actuation rod 30 is configured for being moveable in rotation relative to the linear actuator.

The actuation rod 30 is connected to the at least one rocking assembly 32. For example, the actuation rod 30 is connected to a plurality of rocking assembles 32.

In the example of figure 2, 3 and 5, the actuation rod 30 is a rigid rod, or in other words, is non-articulated. In other examples, such as for example represented in figure 6, the actuation rod 30 comprises a plurality of segments (non-referenced) articulated between them. In particular, in the example of figure 6, a first segment connects the swivel element 52 (that will be introduced later on) to a first rocking assembly 32 and a second segment connects the first rocking assembly 32 to a second rocking assembly 32.

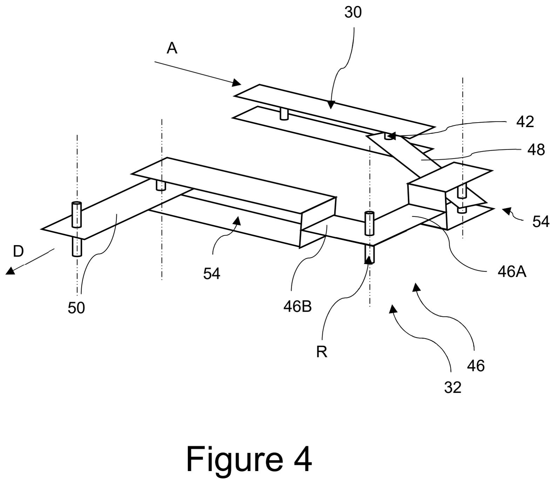

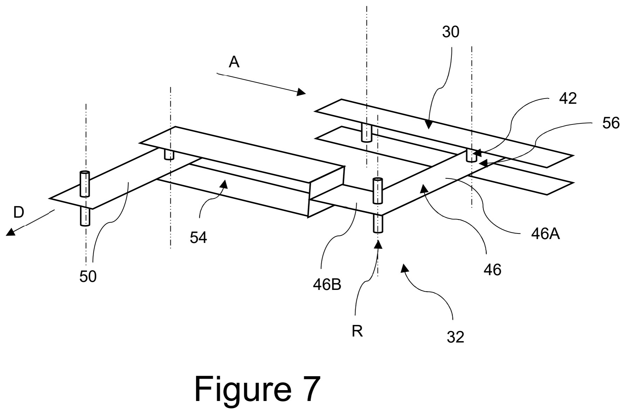

A portion of a first example of actuation rod 30 is visible in figure 4 and 7. **In** such an example, the actuation rod 30 comprises a rod pin element 42. As this will be presented in more details later, the rocking assembly 32 is for example moveable in rotation relative to the rod pin element 42.

Such an actuation rod 30 may comprise several such rod pin elements, such that at least one portion of such an actuation rod 30 has a ladder shape.

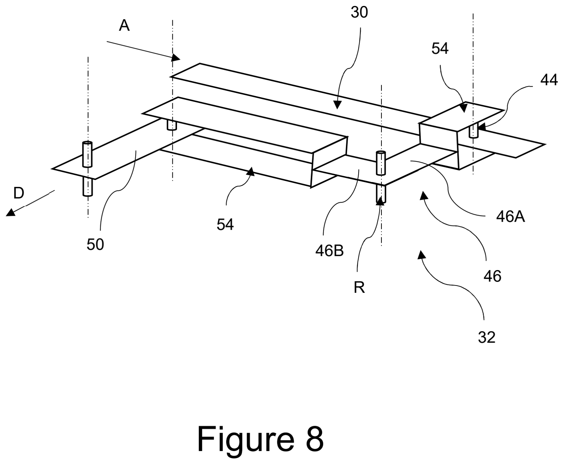

A portion of a second example of actuation rod 30 is illustrated in figure 8. **In** such an example the actuation rod is for example configured for receiving a rocking pin element 44 of the rocking assembly 32. Such a rocking pin element 44 is moveable in rotation relative to the actuation rod 30.

Such an actuation rod 30 may comprise at least one hole (non-referenced), each hold being configured for receiving a respective rocking pin element 44.

The, or each, rocking assembly 32 is connected to the actuation rod 30 and connected to the moveable surface 20.

The rocking assembly 32 is rotatable by the actuation rod 30 relative to the fixed wing portion 22 around the above mentioned rocker rotation axis R. **In** other words, the rocking assembly 32 is configured for being rotated around the rocker rotation axis R by the movement of the actuation rod 30 resulting from the at least one linear actuator 28.

The rocking assembly 32 is further configured for moving the moveable surface 20 along the displacement direction D relative to the fixed wing portion 22. **In** other words, the rocking assembly 32 is configured, by rotating around the rocked rotation axis R, to convert the displacement imprinted by the actuation rod 30 along the actuation direction into a displacement of the moveable surface 20 along the deployment direction D.

The actuation direction A, the rocker rotation axis R and the deployment direction D are substantially parallel.

The rocking assembly 32 comprises a rocker 46. The rocking assembly 30 further comprises a proximal link 48 and/or a distal link 50.

In particular, a rocking assembly 32 comprising a rocker 46, a proximal link 48 and a distal link 50 is presented in the example of figures 2 and 3. A rocking assembly 32 comprising a distal link 50 but no proximal link 48 is presented in the examples of figures 5 and 6.

The proximal link 48 is moveable in rotation relative to the actuation rod 30 and is moveable in rotation relative to the rocker 46. In particular, and for example, the proximal link 48 is moveable in rotation relative to the actuation rod 30 and to the rocker 46 around a rotation axis (non-referenced) being parallel to the rocker rotation axis R

The distal link 50 is moveable in rotation relative to the rocker 46 and is moveable in rotation relative to the moveable surface 20. In particular, and for example, the distal link 50 is moveable in rotation relative to the rocker 46 and to the moveable surface 20 around a rotation axis (non-referenced) being parallel to the rocker rotation axis R.

In the rocking assembly 32 of figures 2 and 3, which is for example as the rocking assembly presented in detail in figure 4, the displacement of the actuation rod 30 induces rotations of the proximal link 48, of the rocker 46 and of the distal link 50 to move the moveable surface 20 along the deployment direction D.

As above mentioned, the rocking assembly 32 presented in the examples of figure 5 and 6, and which is for example as one of the rocking assemblies presented in figures 7 and 8, does not comprise a proximal link 48. In such examples, the actuation rod 30 is for example connected to the rocker 46 and is moveable in rotation, relative to the rocker, in particular around a rotation axis (non-referenced) being parallel to the rocker rotation axis R. In such an example, the linear actuator 28 is for example moveable in rotation relative to the fixed wing portion 22 as above mentioned and the actuation rod 30 is for example moveable in rotation relative to the linear actuator 28 as above mentioned.

The rocker 46 comprises a proximal portion 46A and a distal portion 46B. The proximal portion 46A and the distal portion 46B are for example integral. The proximal portion 46A and the distal portion 46B are for example defining a L-shape.

The rocker 46 is connected to the fixed wing portion 22 and is for example moveable in rotation around the rocker rotation axis R relative to the fixed wing portion 22. The rocker 46 is for example connected to the fixed wing portion in a connection region (non-referenced) between its proximal 46A and distal 46B portions.

For example, as illustrated from figures 4, 7 and 8, the proximal portion 46A and/or the distal portion 46B comprises a fork region 54.

The fork region 54 comprises for example two lugs (non-referenced) arranged on opposed side of the action rod 30, the proximal link 48 or the distal link 50.

For example, that is, in alternative of in complement, the proximal portion 46A and/or the distal portion 46B comprises a flat end 56.

The flat end 56 is for example arranged between two lugs and/or portions of the action rod 30, the proximal link 48 of the distal link 50.

One understands that the cinematic proposed by the rocking assembly 32 presented in the example of figure 2 and 3 and in the examples of figures 5 and 6, is similar, such that such rocking assembly can be interchanged. One however notices that the rocking assembly 32 presented in figures 5 and 6 may require the actuator 28 to be rotatably mounted on the fixed wing portion 22 and/or the actuation rod 30 to be rotatably mounted on the actuator while this may not be required for the rocking assembly presented in figures 2 and 3.

As above mentioned, the driving system 24 comprises for example a plurality of rocking assemblies 32.

Each rocking assembly 32 is connected to the actuation rod 30 and to the moveable surface 20. Each rocking assembly 32 is in particular configured for being rotatable by the actuation rod 30 relative to the fixed wing portion 22 around a respective rocker rotation axis R.

In the examples of figures 2, 3, 5 and 6 each rocking assembly 32 of a respective driving system 24 has a similar geometry.

In other non-illustrated examples, at least two of the plurality of rocking assemblies 32 have a different geometry. One understands that in such an example, the orientation of the moveable surface 20 relative to the fixed wing portion might be different when the moveable surface is in in its deployed position and when it is in its retracted position.

For example, as above mentioned and as illustrated in the examples of figures 5 and 6, the driving system comprises a plurality of linear actuators.

For example, at least one of the linear actuators is connected to a first end 30A of the actuation rod 30 and another of the linear actuators is connected to a second end 30B of the actuation rod. These actuators are for example jointly configured for moving the actuation rod 30.

In alternative, or in complement, when the driving system 24 comprises a plurality of linear actuators 28, two linear actuators are connected to one of the first 30A and second 30B ends of the actuation rod 30.

In such an example, illustrated for example in figure 6, the driving system 24 comprises a swivel element 52. The swivel element 52 is connected to the actuation rod 30, for example to the first 30A or second 30B ends of the actuation rod 30. The swivel element 52 is further connected to two of the linear actuators 28, which are themselves connected to the fixed wing portion 22 as above described. One understands that the swivel element 52 connects the linear actuators 28 to the actuation rod 30.

The swivel element 52 is for example moveable in rotation, for example around an axis parallel to the rocked rotation axis R, relative to the actuation rod 30 and to the two linear actuators 28.

As above mentioned and as visible in the example of figure 6, but applicable to any other examples, the driving system 24 comprises a braking element 34 and a position sensing unit 36.

The position sensing unit 36 is configured for sensing a position of the actuation rod 30 relative to the fixed wing portion 22. The position sensing unit 36 is for example connected to the fixed wing portion 22 and to the actuation rod 30 for sensing relative displacement between the actuation rod 30 and the fixed wing portion 22.

The braking element 34 is configured for braking the actuation rod 30A and/or the, or at least one of the linear actuator(s) 28.

The braking element 34 is for example configured for braking the actuation rod 30 and/or one, or at one of the, actuator(s) as a function of the sensed position. The braking element 34 and the position sensing unit 36 are for example logically connected so that the braking element 34 brakes depending on the sensed position from the position sensing unit 36.

In alternative, or in complement, the braking element 34 is configured for braking the, or one of the, linear actuator(s) as a function of an actuation of the, or at least one of the, linear actuator(s). The braking element 34 is for example logically connected to a control unit (not represented), and is configured for braking the, or one of the, linear actuator(s) as a function of an actuation command emitted by the control unit.

The example of actuation architecture 18 presented from figures 2 to 4 will now be presented in more details.

In this example, the driving system 24 comprises one linear actuator 28, which is fastened to the fixed wing portion 22.

The actuation rod 30 is fastened to the linear actuator 28 so as to be moved along the actuation direction A relative to the fixed wing portion 22.

The actuation rod comprises rod pin elements 42.

Two rocking assemblies 32 are rotatably connected to the actuation rod 30. In particular, rocking assemblies 32 are moveable in rotation relative to the rod pin element 42.

Each rocking assembly 32 comprise a rocker 46, a proximal link 48 and a distal link 50 as above mentioned.

The proximal 46A and distal 46B portions of the rocker each comprise fork regions 54 for cooperating with the proximal link 48 and distal link 50. One understands that other geometries of the rocker 46 could be considered, such as a rocker with flat ends 56 as above presented.

The distal link 50 is rotatably connected to the moveable surface 20 such that an actuation of the linear actuator 28 moves the moveable surface 20 along the deployment direction D.

The example of actuation architecture 18 presented from figure 5 will now be presented in more details. This example differs from the example presented in figures 2 to 4 by the following features. Analogous elements bear the same references.

In the example of figure 5, the driving system 24 comprises two linear actuators 28. Each actuator 28 is connected to an end 30A, 30B of the actuation rod. Each actuator 28 is moveable in rotation relative to the fixed wing portion 22.

The actuation rod 30 is connected to each actuator 28. The actuation rod 30 is moveable in rotation relative to each actuator 28.

Two rocking assemblies 32 are rotatably connected to the actuation rod 30.

Each rocking assembly 32 comprise a rocker 46 and a distal link 50 as above mentioned. The rocking assemblies 32 however do not comprise any proximal link 48.

The actuation rod 30 is directly connected to the rocker 46. Rotation of the actuator 28 relative to the fixed wing portion 22 and rotation of the actuation rod 30 relative to the actuator 28 allows to cater for displacement of the proximal portion 46A of the rocker 46 along the deployment direction D.

The rocking assembly 32 is for example illustrated in figure 7. In such an example, the proximal portion 46A of the rocker 46 comprises a flat end 56 and the distal portion 46B of the rocker 46 comprises a fork region 54.

For such an example of rocking assembly 32, the actuation rod comprises for example at least one rod pin element 42 as above mentioned.

In other examples of such a driving system 24, the rocking assembly is such as illustrated in figure 8. In such an example both the proximal 46A and distal 46B portions of the rocker comprise fork regions 54.

For such an example of rocking assembly 32, the rocking assembly 32, and in particular the fork region 54 of the distal end comprises a rocking pin element 44, the rocking pin 44 element being moveable in rotation relative to the actuation rod 30. The actuation rod 30 for example has a bar shape.

The example of actuation architecture 18 presented from figure 6 will now be presented in more details. This example differs from the examples presented in figures 2 to 4 and in figure 5 by the following features. Analogous elements bear the same references.

**In** this example the driving system 24 comprises two linear actuators 28 and a swivel element 52 connecting the two linear actuators 28 to the actuation rod 30.

Two rocking assemblies 32 are rotatably connected to the actuation rod 30.

The rocking assemblies 32 are analogous to the rocking assemblies 32 presented in the example of figure 5 and can be such as illustrated in figure 7 or in figure 8.

This example also makes explicit the presence of a braking element 34 and of position sensing element 36 as above mentioned. One understands however that although not explicitly illustrated/mentioned for the examples of figures 2 to 4 and 5, such example may comprise such braking element 34 and/or position sensing element 36 as presented in the general description above.

In the example of figure 6, the swivel element 52 is connected to one of the ends 30A, 30B of the actuation rod 30 and the position sensing element 36 is connected to another of the ends 30A, 30B of the actuation rod 30.

The position sensing element 36 is for example moveable in rotation relative to the fixed wing portion 22 and relative to the actuation rod 30.

In this example, the driving system 24 comprises three braking elements 34.

In particular, the driving system 24 comprises an actuation rod braking element 34A. The actuation rod braking element 34A is configured to brake the actuation rod 30, for example as a function of a sensed position sensed by the position sensing unit 36.

The driving system 24 further comprises two actuator braking elements 34B. Each actuator braking element 34B is configured to brake a respective linear actuator 28, for example as a function of an actuation the other linear actuator 28.

For example the braking element is configure to break the actuator 28 that is not being actuated.

In another example, or in complement, the brake are configured for simultaneously braking both actuators 28 for maintaining the position of the actuation rod 30.

As above mentioned, a driving system 24 in which the actuation direction A, the rocker rotation axis R and the deployment direction D are substantially perpendicular between them is especially advantageous for exploiting the movement of the actuation rod 30 all along the actuation rod 30, resulting in a lightweight, simple and cost effective driving system 24.

Having a rocking assembly 32 comprising a proximal link 48 and/or a distal link 50, and the rotation of these proximal 48 and/or distal 50 links is an especially effective and compact way of converting movement of the actuation rod 30 along the actuation direction A into a movement of the moveable surface 20 along the deployment direction D.

The L-shape of the rocker 46 also contributes to this effect.

The use of an actuation rod comprising a rod pin element 42 as above mentioned or the use of a rocking assembly 32 comprising a rocking pin element 44 as above mentioned is especially advantageous to allow for relative rotation of the rocking assembly 32 relative to the actuation rod 30.

Having at least one linear actuator 28 configured for being moveable in rotation relative to the fixed wing portion 22 is especially relevant to cater for displacement of the proximal portion 46A of the rocker 46 along the deployment direction D upon actuation.

Having a plurality of rocking assembly 32 as above mentioned ensures proving a precise and reliable displacement of the moveable surface 20 relative to the fixed wing portion 22.

The use of rocking assemblies 32 having different geometries is especially advantageous for providing optimizing the positioning of the moveable surface 20 relative to the fixed wing portion in both its deployed and retracted positions, thus improving the aerodynamic performances of the moveable surface 20 in conjunction with the fixed wing portion 22.

A driving system 24 comprising at least one braking element 34, and for example a position sensing unit 36 as above mentioned, is especially relevant for improving safety of operation of the actuation architecture 18.

The use of a plurality of linear actuators 28 also ensures redundancy and further improves safety of operation of the actuation architecture 18.

The used of a swivel element 52 combined with two linear actuators 28 is especially advantageous for providing redundancy while having a driving system 24 with a limited spatial footprint at an end 30A, 30B of the actuation rod 30

The use of linear actuators 28 connected at both ends 30A, 30B of the actuation rod 30 is especially relevant for providing redundancy while limiting chordwise footprint of the driving system all along the actuation rod 30.

### REFERENCE SIGNS:

- 10: aircraft
- 12: fuselage
- 14: wings
- 16: moveables system
- 18: actuation architecture
- 20: moveable surface
- 22: fixed wing portion
- 24: driving system
- 26: guiding arrangement
- 28: linear actuator
- 30: actuation rod
- 30A: first end of the actuation rod
- 30B: second end of the actuation rod
- 32: rocking assembly
- 34: braking element
- 34A: actuation rod braking element
- 34B: actuator braking element
- 36: position sensing unit
- 38: body element
- 40: actuation element
- 42: rod pin element
- 44: rocking pin element
- 46: rocker
- 46A: proximal portion of the rocker
- 46B: distal portion of the rocker
- 48: proximal link
- 50: distal link
- 52: swivel element
- 54: fork region
- 56: flat end
- D: deployment direction
- C: chord direction
- A: actuation direction
- R: rocker rotation axis

## Claims

1. Driving system (24) for moving a moveable surface (20) of an aircraft (10) relative to a fixed wing portion (22) of the aircraft (10), the driving system (24) comprising:
- at least one linear actuator (28), configured for being connected to the fixed wing portion (22),
- an actuation rod (30), connected to the linear actuator (28) and configured for being moveable by the linear actuator (28) along an actuation direction (A) relative to the fixed wing portion (22), and
- at least one rocking assembly (32), connected to the actuation rod (30) and configured for being connected to the moveable surface (20), the rocking assembly (32) being configured for being rotatable by the actuation rod (30) relative to the fixed wing portion (22) around a rocker rotation axis (R),
the rocking assembly (32) being configured for moving the moveable surface (20) along a deployment direction (D) relative to the fixed wing portion (22),
wherein the actuation direction (A), the rocker rotation axis (R) and the deployment direction (D) are substantially perpendicular between them.

2. Driving system (24) according to claim 1, wherein the rocking assembly (32) comprises a rocker (46) and comprises a proximal link (48) and/or a distal link (50).

3. Driving system (24) according to claim 2, wherein the proximal link (48) is moveable in rotation relative to the actuation rod (30) and movable in rotation relative to the rocker (46), and/or wherein the distal link (50) is moveable in rotation relative to the rocker (46) and is configured for being moveable in rotation relative to the moveable surface (20).

4. Driving system (24) according to claim 2 or 3, wherein the rocker (46) comprises a proximal portion (46A) and a distal portion (46B), the distal portion (46B) and the proximal portion (46A) defining a L-shape.

5. Driving system (24) according to any of the preceding claims, wherein:
- the actuation rod (30) comprises a rod pin element (42), the rocking assembly (32) being moveable in rotation relative to the rod pin element (42); or
- the rocking assembly (32) comprising a rocking pin element (44), the rocking pin element (44) being moveable in rotation relative to the actuation rod (30).

6. Driving system (24) according to any of the preceding claims, wherein the at least one linear actuator (28) is configured for being moveable in rotation relative to the fixed wing portion (22).

7. Driving system (24) according to any of the preceding claims, wherein the driving system (24) comprises a plurality of rocking assemblies (32), each rocking assembly (32) being connected to the actuation rod (30) and configured for being connected to the moveable surface (20), each rocking assembly (32) being configured for being rotatable by the actuation rod (30) relative to the fixed wing portion (22) around a respective rocker rotation axis (R).

8. Driving system (24) according to claim 7, wherein at least two of the rocking assemblies (32) have a different geometries.

9. Driving system (24) according to any of the preceding claims, wherein the driving system (24) further comprises at least one braking element (34).

10. Driving system (24) according to claim 9, wherein the driving system (24) further comprises a position sensing unit (36), the position sensing unit (36) being configured for sensing a position of the actuation rod (30) relative to the fixed wing portion (22), the braking element (34) being configured for braking the actuation rod (30) as a function of the sensed position and/or for braking the, or at least one of the, linear actuator(s) (28) as a function of an actuation of the, or at least one of the, linear actuator(s) (28).

11. Driving system (24) according to any of the preceding claims, wherein the driving system (24) comprises a plurality of linear actuators (28).

12. Driving system (24) according to claim 11, wherein the driving system (24) comprises a swivel element (52), the swivel element (52) being connected to the actuation rod (30) and moveable in rotation relative to the actuation rod (30), the swivel element (52) connecting two of the linear actuators (28) to the actuation rod (30).

13. Driving system (24) according to claim 11 or 12, wherein at least one of the linear actuators (24) is connected to a first end (30A) of the actuation rod (30) and wherein at least another one of the linear actuators (24) is connected to a second end (30B) of the actuation rod (30).

14. Actuation architecture (18) comprising a moveable surface (20), a fixed wing portion (22) and a driving system (24) according to any of the claims 1 to 13, wherein the at least one actuator (28) is connected to the fixed wing portion (22), the actuation rod (30) being moveable by the actuator (28) along the actuation direction (A) relative to the fixed wing portion (22), the at least one rocking assembly (32) being connected to the moveable surface (20) and being rotatable by the actuation rod (30) relative to the fixed wing portion (22) around the rocker rotation axis (R).

15. Actuation architecture (18) according to claim 14, wherein the actuation architecture (18) further comprises a guiding arrangement (26), configured for guiding the displacement of the moveable surface (20) relative to the fixed wing portion (22) along the deployment direction (D).

## Amended claims

### Amended claims in accordance with Rule 137(2) EPC.

1. Driving system (24) for moving a moveable surface (20) of an aircraft (10) relative to a fixed wing portion (22) of the aircraft (10), the driving system (24) comprising:
- at least one linear actuator (28), configured for being connected to the fixed wing portion (22),
- an actuation rod (30), connected to the linear actuator (28) and configured for being moveable by the linear actuator (28) along an actuation direction (A) relative to the fixed wing portion (22), and
- at least one rocking assembly (32), connected to the actuation rod (30) and configured for being connected to the moveable surface (20), the rocking assembly (32) being configured for being rotatable by the actuation rod (30) relative to the fixed wing portion (22) around a rocker rotation axis (R),
the rocking assembly (32) being configured for moving the moveable surface (20) along a deployment direction (D) relative to the fixed wing portion (22),
wherein the actuation direction (A), the rocker rotation axis (R) and the deployment direction (D) are substantially perpendicular between them,
**characterized in that** the driving system (24) comprises a plurality of linear actuators (28), the driving system (24) comprising a swivel element (52), the swivel element (52) being connected to the actuation rod (30) and moveable in rotation relative to the actuation rod (30), the swivel element (52) connecting two of the linear actuators (28) to the actuation rod (30).

2. Driving system (24) according to claim 1, wherein the rocking assembly (32) comprises a rocker (46) and comprises a proximal link (48) and/or a distal link (50).

3. Driving system (24) according to claim 2, wherein the proximal link (48) is moveable in rotation relative to the actuation rod (30) and movable in rotation relative to the rocker (46), and/or wherein the distal link (50) is moveable in rotation relative to the rocker (46) and is configured for being moveable in rotation relative to the moveable surface (20).

4. Driving system (24) according to claim 2 or 3, wherein the rocker (46) comprises a proximal portion (46A) and a distal portion (46B), the distal portion (46B) and the proximal portion (46A) defining a L-shape.

5. Driving system (24) according to any of the preceding claims, wherein:
- the actuation rod (30) comprises a rod pin element (42), the rocking assembly (32) being moveable in rotation relative to the rod pin element (42); or
- the rocking assembly (32) comprising a rocking pin element (44), the rocking pin element (44) being moveable in rotation relative to the actuation rod (30).

6. Driving system (24) according to any of the preceding claims, wherein the at least one linear actuator (28) is configured for being moveable in rotation relative to the fixed wing portion (22).

7. Driving system (24) according to any of the preceding claims, wherein the driving system (24) comprises a plurality of rocking assemblies (32), each rocking assembly (32) being connected to the actuation rod (30) and configured for being connected to the moveable surface (20), each rocking assembly (32) being configured for being rotatable by the actuation rod (30) relative to the fixed wing portion (22) around a respective rocker rotation axis (R).

8. Driving system (24) according to claim 7, wherein at least two of the rocking assemblies (32) have a different geometries.

9. Driving system (24) according to any of the preceding claims, wherein the driving system (24) further comprises at least one braking element (34).

10. Driving system (24) according to claim 9, wherein the driving system (24) further comprises a position sensing unit (36), the position sensing unit (36) being configured for sensing a position of the actuation rod (30) relative to the fixed wing portion (22), the braking element (34) being configured for braking the actuation rod (30) as a function of the sensed position and/or for braking the, or at least one of the, linear actuator(s) (28) as a function of an actuation of the, or at least one of the, linear actuator(s) (28).

11. Driving system (24) according to any of the preceding claims, wherein at least one of the linear actuators (28) is connected to a first end (30A) of the actuation rod (30) and wherein at least another one of the linear actuators (28) is connected to a second end (30B) of the actuation rod (30).

12. Actuation architecture (18) comprising a moveable surface (20), a fixed wing portion (22) and a driving system (24) according to any of the claims 1 to 11, wherein the at least one actuator (28) is connected to the fixed wing portion (22), the actuation rod (30) being moveable by the actuator (28) along the actuation direction (A) relative to the fixed wing portion (22), the at least one rocking assembly (32) being connected to the moveable surface (20) and being rotatable by the actuation rod (30) relative to the fixed wing portion (22) around the rocker rotation axis (R).

13. Actuation architecture (18) according to claim 12, wherein the actuation architecture (18) further comprises a guiding arrangement (26), configured for guiding the displacement of the moveable surface (20) relative to the fixed wing portion (22) along the deployment direction (D).
